**Europäisches Patentamt**

**European Patent Office**

**Office européen des brevets**

(11) Veröffentlichungsnummer: **0 210 566**
**A2**

# EUROPÄISCHE PATENTANMELDUNG

(21) Anmeldenummer: 86109962.0

(22) Anmeldetag: 21.07.86

(51) Int. Cl.⁴: **C 08 G 18/66**
C 08 G 18/48, C 08 G 18/24
C 08 G 18/73, C 08 G 18/10
C 08 G 18/78

(30) Priorität: 02.08.85 DE 3527863

(43) Veröffentlichungstag der Anmeldung:
04.02.87 Patentblatt 87/6

(84) Benannte Vertragsstaaten:
AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Ganster, Otto, Dr.
Droste-Huelshoff-Strasse 5
D-5068 Odenthal(DE)

(72) Erfinder: Pilger, Friedhelm, Dr.
Schillingstrasse 37-39
D-5000 Köln 80(DE)

(72) Erfinder: Rasshofer, Werner, Dr.
Leopold-Gmelin-Strasse 31
D-5000 Köln 80(DE)

(72) Erfinder: Franzen, Reinhold
Baumberger Strasse 90
D-5090 Leverkusen(DE)

(54) Verfahren zur Herstellung von lichtbeständigen, elastischen Polyurethan-Formteilen.

(57) Ein neues Verfahren zur Herstellung von lichtbeständigen, gegebenenfalls geschäumten, elastischen Polyurethan-Formteilen durch Umsetzung in geschlossenen Formen von organischen Polyisocyanaten mit Polyetherpolyolen des Molekulargewichtsbereichs 500 bis 10 000 und mit Kettenverlängerungs- bzw. Vernetzungsmitteln eines unter 500 liegenden Molekulargewichts in Gegenwart von organischen Zinnverbindungen als Katalysator und gegebenenfalls unter Mitverwendung von weiteren Hilfs- und Zusatzstoffen, wobei als Polyisocyanate Urethangruppen aufweisende Polyisocyanate auf Basis von 1,6-Diisocyanatohexan und gegebenenfalls Ethergruppen aufweisenden Alkandiolen des Molekulargewichtsbereichs 62 bis 400 und als Kettenverlängerungs-bzw. Vernetzungsmittel Di- und/oder Trialkanolamine gegebenenfalls zusammen mit stickstofffreien niedermolekularen Polyhydroxylverbindungen verwendet werden.

EP 0 210 566 A2

BAYER AKTIENGESELLSCHAFT    5090 Leverkusen, Bayerwerk

Konzernverwaltung RP

Patentabteilung    Wr/by-c

## Verfahren zur Herstellung von lichtbeständigen, elastischen Polyurethan-Formteilen

Die Erfindung betrifft ein verbessertes Verfahren zur Herstellung von lichtbeständigen, gegebenenfalls geschäumten, elastischen Polyurethan-Formteilen durch Umsetzung in geschlossenen Formen von ausgewählten Ausgangsmaterialien, insbesondere unter gleichzeitiger Verwendung von speziellen, Urethangruppen aufweisenden Polyisocyanaten und ausgewählten, tert. Stickstoff aufweisenden Kettenverlängerungs- bzw. Vernetzungsmitteln in Kombination mit ausgewählten Zinn-Katalysatoren.

Es ist bereits bekannt, unter Verwendung von aliphatischen und/oder cycloaliphatischen Polyisocyanaten lichtbeständige, elastische Polyurethanschaumstoffe herzustellen. Da jedoch die Reaktivität von aliphatischen bzw. cycloaliphatischen Polyisocyanaten wesentlich geringer ist als die der bei der Herstellung von Polyurethanschaumstoffen üblicherweise eingesetzten aromatischen Polyisocyanate, sah man sich bislang dazu gezwungen sehr spezielle Katalysatorkombinationen für die Herstellung derartiger Schaumstoffe einzusetzen.

Le A 23 992-Ausland

So empfiehlt beispielsweise die DE-OS 3 008 811, zur Katalyse der Polyurethanbildungsreaktion Verbindungen, die primäre oder sekundäre Aminogruppen enthalten, in Kombination mit einer organischen Wismutverbindung zu verwenden.

In der DE-OS 2 447 067 bzw. der DE-OS 2 710 901 werden spezielle Kombinationen von bestimmten Aminen, Amidinen oder Guanidinen mit Erdalkalisalzen bzw. Kombinationen von Verbindungen mit primären oder sekundären Aminogruppen mit Bleiverbindungen empfohlen.

Die DE-OS 2 825 569 empfiehlt Kombinationen von Alkaliverbindungen und/oder von Hexahydrotriazinderivaten mit organischen Zinn-, Zink- und/oder Eisen(II)verbindungen.

Die DE-OS 2 832 253 empfiehlt schließlich Alkali- und Erdalkalihydroxide in Kombination mit organischen Zinn-, Blei- und Eisenverbindungen.

Mit dem nachstehend näher beschriebenen erfindungsgemäßen Verfahren wird nun ein neuer Weg zu lichtbeständigen, elastischen Polyurethan-Formteilen gewiesen, bei welchem physiologisch unbedenkliche Polyisocyanate mit physiologisch unbedenklichen Reaktionspartnern und Hilfsmitteln zu hochwertigen Endprodukten umgesetzt werden. Das nachstehend näher beschriebene erfindungsgemäße Verfahren ist insbesondere durch die gleichzeitige Verwendung von speziellen, monomerenfreien, Urethangruppen aufweisenden Polyisocyanaten und Di- bzw. Trialkanolaminen als Kettenverlängerungs- bzw. Vernetzungsmittel gekennzeichnet,

Le A 23 992

wobei als Metallkatalysatoren lediglich die klassischen Zinn(IV)salze, insbesondere Dimethylzinn-dilaurat zum Einsatz gelangen.

Die DE-OS 1 804 362 beschreibt zwar bereits die Herstellung von Polyurethan-Formteilen, wobei u.a. als organische Polyisocyanate auch Umsetzungsprodukte von niedermolekularen Polyolen mit 1,6-Diisocyanatohexan zum Einsatz gelangen sollen. Wie dem einzigen diesbezüglichen Ausführungsbeispiel (Beispiel 6) jedoch entnommen werden kann, handelt es sich bei diesen Umsetzungsprodukten um Semiprepolymere, d.h. um Lösungen der Umsetzungsprodukte in überschüssigem 1,6-Diisocyanatohexan. Derartige Lösungen werden erfindungsgemäß nicht als Polyisocyanatkomponente verwendet. Im übrigen erwähnt diese Vorveröffentlichung an keiner Stelle die Zweckmäßigkeit der gleichzeitigen Verwendung von Di- und/oder Trialkanolaminen und von Zinnkatalysatoren.

Die DE-OS 2 945 855 lehrt zwar die Verwendung von Diethanolamin als Vernetzungsmittel, jedoch werden beim Verfahren dieser Vorveröffentlichung ausschließlich mindestens tetrafunktionelle Polyetherpolyole, andere als die erfindungsgemäß einzusetzenden Polyisocyanate und vorzugsweise (vgl. Ausführungsbeispiele) Bleiverbindungen als Katalysatoren eingesetzt.

Gegenstand der Erfindung ist ein Verfahren zur Herstellung von lichtbeständigen, gegebenenfalls geschäumten, elastischen Polyurethan- Formteilen durch Umsetzung in geschlossenen Formen von

Le A 23 992

a)  organischen Polyisocyanaten

    mit

b)  Polyetherpolyolen des Molekulargewichtsbereichs
    500 bis 10 000 mit einer Hydroxylfunktionalität von
    2 oder 3 oder mit Gemischen von Polyetherpolyolen des
    genannten Molekulargewichtsbereichs einer mittleren
    Hydroxylfunktionalität von 2,0 bis 3 und mit

c)  Kettenverlängerungs- bzw. Vernetzungsmitteln eines
    unter 500 liegenden Molekulargewichts, welche eine
    (mittlere) Funktionalität im Sinne der
    Isocyanat-Additionsreaktion von 2 bis 3 aufweisen in Gegenwart von

d)  mindestens einer organischen Zinnverbindung als Katalysator

    und gegebenenfalls unter Mitverwendung von

e)  weiteren, aus der Polyurethanchemie an sich bekannten
    Hilfs- und Zusatzstoffen,

wobei die Reaktionspartner unter Einhaltung einer Isocyanat-Kennzahl von 70 bis 130 zur Reaktion gebracht
werden, dadurch gekennzeichnet, daß man

Le A 23 992

als organische Polyisocyanate a) Urethangruppen aufweisende Polyisocyanate mit einem Gehalt an freiem 1,6-Diisocyanatohexan von unter 2 Gew.-%, wie sie durch Umsetzung von 1,6-Diisocyanatohexan mit, gegebenenfalls Ethersauerstoffbrücken aufweisenden Alkandiolen des Molekulargewichtsbereichs 62 bis 400 unter Einhaltung eines NCO/OH-Äquivalentverhältnisses von mindestens 2,5:1 und anschließender Entfernung des nicht umgesetzten, überschüssigen 1,6-Diisocyanatohexans erhalten werden,

und

als Komponente c) Di- und/oder Trialkanolamine, gegebenenfalls zusammen mit bis zu 50 Äquivalent-%, bezogen auf die gegenüber Isocyanatgruppen reaktionsfähigen Gruppen der Komponente c), an di- und/oder trifunktionellen, gegebenenfalls Etherbrücken aufweisenden Alkandiolen und/oder triolen eines unter 500 liegenden Molekulargewichts

verwendet, wobei die Di- und/oder Trialkanolamine der Komponente c) in einer Menge von 3 bis 50 Gew.-Teilen pro 100 Gew.-Teilen der Komponente b) zum Einsatz gelangen.

Bei der beim erfindungsgemäßen Verfahren einzusetzenden Polyisocyanatkomponente a) handelt es sich um Urethangruppen aufweisende Polyisocyanate auf Basis von 1,6-Diisocyanatohexan. Diese Polyisocyanate weisen einen Gehalt an monomerem 1,6-Diisocyanatohexan von unter 2, vorzugsweise von unter 1 Gew.-% auf. Sie werden erhalten durch Umsetzung von 1,6-Diisocyanatohexan mit gegebenen-

Le A 23 992

falls Ethergruppen aufweisenden Alkandiolen des Molekulargewichtsbereichs 62 bis 400 bzw. mit Gemischen derartiger
Alkandiole, wobei die Umsetzung unter Einhaltung eines
NCO/OH-Äquivalentverhältnisses von >2,5:1, vorzugsweise
von 8:1 bis 15:1 erfolgt, und wobei schließlich im Anschluß an die Umsetzung nicht umgesetztes 1,6-Diisocyanatohexan durch Extraktion (beispielsweise mit n-Hexan)
oder vorzugsweise durch Destillation (beispielsweise
mittels eines Dünnschichtverdampfers) entfernt wird. Die
Umsetzung zwischen dem Diisocyanat und dem Alkandiol
findet im allgemeinen innerhalb des Temperaturbereichs von
60 bis 100°C statt.

Geeignete Alkandiole sind Ethylenglykol, Diethylenglykol,
Triethylenglykol, Tetraethylenglykol, Propylenglykol, Dipropylenglykol, Tripropylenglykol, Tetrapropylenglykol,
1,2-, 1,4- oder 2,3-Dihydroxybutan, 1,6-Dihydroxyhexan,
technische Octandiol-Isomerengemische oder beliebige Gemische derartiger, gegebenenfalls Etherbrücken aufweisender Alkandiole. Vorzugsweise werden zur Herstellung der
NCO-Prepolymeren Di- und/oder Tripropylenglykol, besonders
bevorzugt Dipropylenglykol eingesetzt.

Bei der Komponente b) handelt es sich um Polyetherpolyole
des Molekulargewichtsbereichs 500 bis 10 000, vorzugsweise
2000 bis 8000 mit zwei oder drei endständigen Hydroxylgruppen bzw. um Gemische von Polyetherpolyolen der genannten Molekulargewichtsbereiche einer (mittleren) Hydroxylfunktionalität von 2,0 bis 3. Die Polyetherpolyole
werden in an sich bekannter Weise durch Alkoxylierung von
geeigneten Startermolekülen wie beispielsweise Glycerin,

Le A 23 992

Trimethylolpropan, Wasser, Propylenglykol oder Ethylenglykol erhalten. Falls Gemische aus di- und trifunktionellen Polyetherpolyolen der genannten Hydroxylfunktionalität eingesetzt werden, kann die Herstellung der Gemische durch Alkoxylierung eines entsprechenden Startergemischs oder durch Abmischung von separat hergestellten Polyetherpolyolen erfolgen. Als Alkoxylierungsmittel dienen Propylenoxid und Ethylenoxid, welche gegebenenfalls auch im Gemisch zum Einsatz gelangen können. Die Polyetherketten der Polyetherpolyole bestehen jedoch vorzugsweise zumindest zu 50 Gew.-% aus Propylenoxideinheiten, jedoch mit der Maßgabe, daß bei der Alkoxylierungsreaktion am Ende reines Ethylenoxid in einer Menge von mindestens 5 Gew.-%, vorzugsweise von mindestens 10 Gew.-%, bezogen auf das Gesamtgewicht aller zum Einsatz gelangenden Alkylenoxide verwendet wird. Der Anteil der Komponente b) an derartigen Ethylenoxid-getippten Polyetherpolyolen liegt vorzugsweise mindestens bei 80 Gew.-%, bezogen auf das Gesamtgewicht der Komponente b). Vorzugsweise werden ausschließlich Ethylenoxid-getippte Polyetherpolyole mit dem genannten Gehalt an endständigen Ethylenoxideinheiten verwendet. Besonders bevorzugte Polyetherpolyole sind solche, die durch Propoxylierung der beispielhaft genannten Startermoleküle und anschließende Ethoxylierung des Propoxylierungsprodukts erhalten worden sind, wobei das Gewichtsverhältnis Propylenoxid : Ethylenoxid bei 50:50 bis 95:5, vorzugsweise bei 70:30 bis 90:10 liegt.

Das Molekulargewicht der Polyetherpolyole läßt sich aus der Hydroxylfunktionalität und dem Hydroxylgruppengehalt errechnen.

Le A 23 992

Bei der Komponente c) handelt es sich um, im Sinne der Isocyanat-Additionsreaktion di- und/oder trifunktionelle Verbindungen eines unter 500 liegenden Molekulargewichts. Der erfindungswesentliche Bestandteil der Komponente c) besteht aus Di- und/oder Trialkanolaminen mit vorzugsweise ausschließlich sekundären oder tertiären Aminogruppen wie beispielsweise Diethanolamin, Triethanolamin, N-Methyl-diethanolamin, oder, weniger bevorzugt, entsprechenden Verbindungen mit sekundären Hydroxylgruppen wie Dipropanolamin, Tripropanolamin oder N-Methyl-dipropanolamin. Ganz besonders bevorzugt wird Diethanolamin verwendet. Grundsätzlich können auch Gemische derartiger Di- und Trialkanolamine verwendet werden. Neben diesen Di- und/oder Trialkanolaminen können als Kettenverlängerungs- bzw. Vernetzungsmittel auch stickstofffreie, gegebenenfalls Etherbrücken aufweisende Alkandiole und/oder -triole verwendet werden. Die Komponente c) besteht zu maximal 50 Äquivalent-%, bezogen auf die in den einzelnen Verbindungen vorliegenden, gegenüber Isocyanatgruppen reaktionsfähigen Gruppen, aus derartigen stickstofffreien, gegebenenfalls Etherbrücken aufweisenden Alkandiolen und/oder -triolen. Beispiele für derartige stickstofffreie Verbindungen sind die bei der Beschreibung der Komponente a) genannten Diole und darüber hinaus Triole wie Glycerin, Trimethylolpropan oder die Alkoxylierungs- vorzugsweise Propoxylierungsprodukte dieser Triole, soweit ihr Molekulargewicht unterhalb 500 liegt.

Die Komponente c) wird in solchen Mengen eingesetzt, daß in dem Reaktionsgemisch pro 100 Gew.-Teilen der Komponente b) 3 bis 50, vorzugsweise 5 bis 30 Gew.-Teile an Di- und/oder Trialkanolaminen der beispielhaft genannten Art vorliegen.

Le A 23 992

Bei den Katalysatoren d) handelt es sich um Dialkylzinn-(IV)salze von Carbonsäuren, wobei die mit dem Zinnatom verknüpften Alkylreste 1 bis 4 Kohlenstoffatome und die indifferenten Kohlenwasserstoffreste der vorzugsweise aliphatischen Carbonsäuren vorzugsweise 7 bis 11 Kohlenstoffatome aufweisen. Beispiele derartiger Zinnkatalysatoren sind Dimethylzinndilaurat, Dimethylzinndioctoat, Dibutylzinndilaurat oder Dimethylzinndioctoat. Vorzugsweise werden die beispielhaft genannten Dimethylzinn-Verbindungen, insbesondere Dimethylzinndilaurat verwendet.

Die Katalysatoren werden in einer Menge von 0,01 bis 5 Gew.-Teilen, vorzugsweise von 0,2 bis 2 Gew.-Teilen pro 100 Gew.-Teile der Komponente b) verwendet.

Bei den gegebenenfalls mitzuverwendenden Hilfs- und Zusatzmitteln e) handelt es sich beispielsweise um

e1) Treibmittel wie Wasser und/oder leicht flüchtigen organischen Substanzen wie z.B. Aceton, Ethylacetat, halogensubstituierte Alkane wie Methylenchlorid, Chloroform, Ethylidenchlorid, Vinylidenchlorid, Monofluortrichlormethan, Chlordifluormethan oder Dichlordifluormethan. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von

Le A 23 992

- 10 -

Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Weitere, gegebenenfalls mitzuverwendende Hilfs- und Zusatzmittel sind beispielsweise

e2) Lichtstabilisatoren. Hierzu gehören beispielsweise Piperidinderivate wie 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)-sebacat, Bis-(2,2,6,6-tetramethyl-4-piperidyl)-suberat oder Bis-(2,2,6,6-tetramethyl-4-piperidyl)-dodecandioat; Benzophenonderivate wie 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivate wie 2-(2'-Hydroxy-3',5'-di-tert.-amylphenyl)-benztriazol; Oxalanilide wie 2-Ethyl-2'-ethoxy- oder 4-Methyl-4'-methoxyoxalanilid; Salicylsäurephenylester und Derivate wie Salicylsäurephenylester, Salicylsäure-4-tert.-butylphenylester und Salicylsäure-4-tert.-octylphenylester; Zimtsäureesterderivate wie α-Cyano-β-methyl-4-methoxyzimtsäuremethylester, α-Cyano-β-methyl-4-methoxyzimtsäurebutylester, α-Cyano-β-phenylzimtsäureethylester und α-Cyano-β-phenylzimtsäureisooctylester oder Malonesterderivate wie 4-Methoxy-benzylidenmalon-

Le A 23 992

säuredimethylester, 4-Methoxybenzylidenmalonsäure-diethylester, 4-Butoxy-benzylidenmalonsäuredimethyl-ester.

Die vorgenannten Lichtstabilisatoren werden erfindungsge-mäß einzeln oder in Kombinationen verwendet. Bevorzugt werden Mischungen von Piperidin- mit Benztriazolderi-vaten.

Weitere, gegebenenfalls mitzuverwendende Hilfs- und Zu-satzstoffe sind

e3) oberflächenaktive Zusatzstoffe (Emulgatoren und Schaumstabilisatoren). Als Emulgatoren kommen z.B. die Natriumsalze von Ricinusölsulfonaten oder auch von Fettsäuren oder Salze von Fettsäuren mit Aminen wie ölsaures Diethylamin oder stearinsauren Diethanolamin in Frage. Auch Alkali- oder Ammoniumsalze von Sulfonsäuren wie etwa von Dodecylbenzolsulfonsäuren wie Ricinolsäure oder von polymeren Fettsäuren können als oberflächenaktive Zusatzstoffe mitverwendet werden, außerdem ethoxyliertes Nonylphenol.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von bele A 23 992

- 12 -

sonderem Interesse sind vielfach über Allophanatgruppen verzweigte Polysiloxan-Polyoxyalkylen-Copolymere gemäß DE-Offenlegungsschrift 2 558 523.

Die vorgenannten Emulgatoren oder Stabilisatoren werden erfindungsgemäß bevorzugt einzeln, aber auch in beliebiger Kombination verwendet.

Weitere, gegebenenfalls mitzuverwendende Hilfs- und Zusatzmittel sind beispielsweise Zellregler der an sich bekannten Art wie Paraffine oder Fettalkohole, Pigmente oder Farbstoffe, Flammschutzmittel der an sich bekannten Art wie z.B. Trischlorethylphosphat oder Ammoniumphosphat und -polyphosphat oder Füllstoffe wie Bariumsulfat, Kieselgur, Ruß, Schlämmkreide oder auch verstärkend wirkende Glasfasern. Schließlich können beim erfindungsgemäßen Verfahren auch die an sich bekannten inneren Formtrennmittel mitverwendet werden.

Vor der Durchführung des erfindungsgemäßen Verfahrens werden vorzugsweise die Komponenten b) und c) zu einer "Polyolkomponente" vermischt, die dann mit der Polyisocyanatkomponente a) als "one-shot-System" verarbeitet wird. Vor der Durchmischung der "Polyolkomponente" mit der Polyisocyanatkomponente a) werden den genannten Reaktionspartnern die Katalysatoren d) und die gegebenenfalls mitverwendeten Hilfs- und Zusatzmittel e) einverleibt. So können beispielsweise die organischen Treibmittel und die Lichtstabilisatoren der Polyisocyanatkomponente a) und

Le A 23 992

die Katalysatoren d) und die gegebenenfalls mitverwendet, sonstigen Hilfs- und Zusatzmittel e) der Polyolkomponente zugemischt werden. Die Herstellung des reaktionsfähigen Gemischs aus den genannten Komponenten erfolgt unter Einhaltung einer NCO-Kennzahl (= NCO/H-aktiv-Äquivalentverhältnis x 100) von 70 bis 130, vorzugsweise 75 bis 110 unter Verwendung der üblichen Mischaggregate, wie sie beispielsweise aus der Reaktionsspritzgußtechnik bekannt sind. Im Falle der Verwendung von Alkanolaminen mit sekundären Aminogruppen als wesentlicher Teil der Komponente c) wird die NCO-Kennzahl vorzugsweise unter 100 gehalten. Das reaktionsfähige Gemisch wird unmittelbar nach seiner Herstellung in geschlossene Formen (beispielsweise Stahl- oder Aluminiumformen), deren Innenwände gegebenenfalls mit den üblichen äußeren Trennmitteln beschichtet worden sind, eingetragen. Die Menge des in die Form eingetragenen Reaktionsgemischs und auch die Menge des gegebenenfalls mitverwendeten Treibmittels hängt von der angestrebten Dichte des Formteils ab. Bei völligem Befüllen der Form entstehen massive Formteile, die insbesondere in Abhängigkeit der Art und Menge der gegebenenfalls mitverwendeten Füllstoffe eine Dichte von ca. 1,0 bis 1,4 g/cm³ aufweisen. Falls die Form nur teilweise befüllt und gleichzeitig ein Treibmittel mitverwendet wird, entstehen beim erfindungsgemäßen Verfahren mikrozellulare (Dichtebereich etwa 0,8 bis 1,0 g/cm³) bzw. geschäumte (Gesamtdichte ca. 0,1 bis 0,8, vorzugsweise 0,3 bis 0,7 g/cm³) Formteile, wobei die Formteile auf jeden Fall eine kompakte Oberfläche bzw. nichtzellige Außenhaut aufweisen.

Le A 23 992

Die Temperatur des in die Form einzubringenden Gemischs liegt im allgemeinen bei 20 bis 60°C, vorzugsweise bei 20 bis 50°C. Die Temperatur der Formen wird bei der Durchführung des erfindungsgemäßen Verfahrens bei 40 bis 80, vorzugsweise 55 bis 65°C gehalten. Die Formkörper können im allgemeinen nach einer Formstandzeit von 3 bis 10 Minuten entformt werden. Die so erhaltenen erfindungsgemäßen, elastischen Formteile weisen hervorragende mechanische Eigenschaften und eine ausgezeichnete Licht- und insbesondere UV-Stabilität auf. Sie eignen sich beispielsweise zur Herstellung von Polsterteilen wie Armlehnen, Sitzauflagen im Möbel- und Fahrzeugbau, elastischen Griffen für Werkzeuge und Bediehungselemente, elastischen Auflagen von Tischkanten, Stoßecken von Möbeln und Stoßfängern oder Scheuerleisten von Fahrzeugen.

Die nachstehenden Beispiele dienen zur weiteren Erläuterung des erfindungsgemäßen Verfahrens. Alle Angaben in "Prozent" bzw. in "Teilen" beziehen sich auf das Gewicht.

_e A 23 992

## Beispiele

In den nachfolgenden Beispielen werden folgende Abkürzungen verwendet:

Polyol I: Polyetherpolyol der OH-Zahl 27, hergestellt durch Propoxylierung von Trimethylolpropan und Ethoxylierung des Propoxylierungsproduktes (Gewichtsverhältnis PO:EO = 75:25).

Polyol II: Polyetherpolyol der OH-Zahl 28, hergestellt durch Propoxylierung von Propylenglykol und anschließende Ethoxylierung des Propoxylierungsproduktes (Gewichtsverhältnis PO:EO = 70:30).

Polyol III: Polyetherpolyol der OH-Zahl 35, hergestellt durch Propoxylierung von Trimethylolpropan und Ethoxylierung des Propoxylierungsproduktes (Gewichtverhältnis PO:EO = 82,5:17,5).

Kettenverlängerer I: Propoxylierungsprodukt von Trimethylolpropan der OH-Zahl 1020.

TMP: Trimethylolpropan

EG: Ethylenglykol

Stabilisator I: Handelsüblicher Polyetherpolysiloxan-Stabilisator ("Stabilisator L 5305" der Union Carbide).

Le A 23 992

Stabilisator II: Bis-(2,2,6,6-tetramethyl-4-piperidyl-)-sebacat.

Stabilisator III: 2-(2'-Hydroxy-3',5'-di-t-amyl-phenyl)-benztriazol.

Polyisocyanat I:

Gedünnschichtetes Umsetzungsprodukt von 1,6-Diisocyanatohexan mit Dipropylenglykol im Molverhältnis 10:1; Monomerengehalt: 0,3 %; NCO-Gehalt: 14,3 %.

Polyisocyanat II:

Gedünnschichtetes Umsetzungsprodukt von 1,6-Diisocyanatohexan mit technischem Octandiol im Molverhältnis 10:1; Monomerengehalt: 0,9 %; NCO-Gehalt: 15,5 %.

Polyisocyanat III:

Gedünnschichtetes Umsetzungsprodukt von 1,6-Diisocyanatohexan mit einem Gemisch aus 100 Gew.-Teilen 1,2-Propandiol und 154 Gew.-Teilen Dipropylenglykol im Molverhältnis 10:1; Monomerengehalt: 1,1 %; NCO-Gehalt: 17,9 %.

Zur Durchführung der nachstehend tabellarisch zusammengefaßten Beispiele 1 bis 8 wurden die in der Tabelle angegebenen Ausgangsmaterialien zunächst zu den entsprechenden Polyol- bzw. Polyisocyanatkomponenten vereinigt, worauf diese mittels eines Laboratoriumsrührers unter Einhaltung der in der Tabelle angegebenen NCO-Kennzahlen miteinander vermischt wurden. Unmittelbar nach der Herstellung der

Le A 23 992

Reaktionsgemische, die eine Temperatur von ca. 25°C aufwiesen, wurden diese in verschließbare Aluminiumformen der Abmessung 20 x 20 x 1 cm eingetragen, deren Temperatur bei ca. 60°C gehalten wurde, und deren Innenwände mit einem handelsüblichen Formtrennmittel ((R)Acmosil P 180 der Firma Acmos, Bremen) beschichtet wurden. Die Menge des in die Formen eingetragenen Reaktionsgemisches wurde jeweils so bemessen, daß Formkörper einer Dichte von 0,4 g/cm³ resultierten. Die Formkörper wurden nach einer Formstandzeit von 5 Minuten entformt. Es resultierten jeweils lichtbeständige, geschäumte, elastische Formkörper, die eine geschlossene Oberflächenschicht aufweisen.

Le A 23 992

Le A 23 992

| Beispiel Nr. | | 1 | 2 | 3 | 4 | 5 | 6 | 7 | 8 |
|---|---|---|---|---|---|---|---|---|---|
| Polyol I | GT | 80 | 80 | 80 | 80 | - | - | 80 | 80 |
| Polyol II | GT | - | - | - | - | 80 | - | - | - |
| Polyol III | GT | - | - | - | - | - | 80 | - | - |
| Kettenverlängerer I | GT | 3 | - | - | - | 3 | 3 | 3 | 3 |
| TMP | GT | - | 3 | - | - | - | - | - | - |
| EG | GT | - | - | - | 3 | - | - | - | - |
| Diethanolamin | GT | 10 | 10 | - | 10 | 10 | 10 | 10 | 10 |
| Triethanolamin | GT | - | - | 15 | - | - | - | - | - |
| Dimethylzinndilaurat | GT | 0,6 | 0,6 | 0,6 | 0,6 | 0,6 | 0,6 | 0,6 | 0,6 |
| $H_2O$ | GT | 0,3 | 0,3 | 0,3 | 0,3 | 0,3 | 0,3 | 0,3 | 0,3 |
| Stabilisator I | GT | 0,3 | 0,3 | 0,3 | 0,3 | 0,3 | 0,3 | 0,3 | 0,3 |
| Polyisocyanat I | GT | 97 | 101 | 115 | 110 | 98 | 101 | - | - |
| Polyisocyanat II | GT | - | - | - | - | - | - | 91 | - |
| Polyisocyanat III | GT | - | - | - | - | - | - | - | 80 |
| Stabilisator II | GT | 0,5 | 0,5 | 0,5 | 0,5 | 0,5 | 0,5 | 0,5 | 0,5 |
| Stabilisator III | GT | 0,2 | 0,2 | 0,2 | 0,2 | 0,2 | 0,2 | 0,2 | 0,2 |
| $C\ Cl_3F$ | GT | 10 | 10 | 10 | 10 | 10 | 10 | 10 | 10 |
| Methylenchlorid | GT | 5 | 5 | 5 | 5 | 5 | 5 | 5 | 5 |
| NCO-Kennzahl | | 80 | 81 | 105 | 82 | 81 | 81 | 81 | 83 |
| Start-/Abbindezeit | s | 20/90 | 20/88 | 18/56 | 25/63 | 14/72 | 25/95 | 26/65 | 20/65 |

GT = Gewichtsteile

0210566

**Patentansprüche**

1. Verfahren zur Herstellung von lichtbeständigen, gegebenenfalls geschäumten, elastischen Polyurethan-Formteilen durch Umsetzung in geschlossenen Formen von

   a) organischen Polyisocyanaten mit

   b) Polyetherpolyolen des Molekulargewichtsbereichs 500 bis 10 000 mit einer Hydroxylfunktionalität von 2 oder 3 oder mit Gemischen von Polyetherpolyolen des genannten Molekulargewichtsbereichs einer mittleren Hydroxylfunktionalität von 2,o bis 3 und mit

   c) Kettenverlängerungs- bzw. Vernetzungsmitteln eines unter 500 liegenden Molekulargewichts, welche eine (mittlere) Funktionalität im Sinne der Isocyanat-Additionsreaktion von 2 bis 3 aufweisen in Gegenwart von

   d) mindestens einer organischen Zinnverbindung als Katalysator und gegebenenfalls unter Mitverwendung von

Le A 23 992

e) weiteren, aus der Polyurethanchemie an sich
bekannten Hilfs- und Zusatzstoffen,

wobei die Reaktionspartner unter Einhaltung einer
Isocyanat-Kennzahl von 70 bis 130 zur Reaktion gebracht werden, dadurch gekennzeichnet, daß man

als organische Polyisocyanate a) Urethangruppen aufweisende Polyisocyanate mit einem Gehalt an freiem
1,6-Diisocyanatohexan von unter 2 Gew.-%, wie sie
durch Umsetzung von 1,6-Diisocyanatohexan mit, gegebenenfalls Ethersauerstoffbrücken aufweisenden Alkandiolen des Molekulargewichtsbereichs 62 bis 400 unter
Einhaltung eines NCO/OH-Äquivalentverhältnisses von
mindestens 2,5:1 und anschließender Entfernung des
nicht umgesetzten, überschüssigen 1,6-Diisocyanatohexans erhalten werden

und

als Komponente c) Di- und/oder Trialkanolamine, gegebenenfalls zusammen mit bis zu 50 Äquivalent-%,
bezogen auf die gegenüber Isocyanatgruppen reaktionsfähigen Gruppen der Komponente c), an di- und/oder
trifunktionellen, gegebenenfalls Etherbrücken aufweisenden Alkandiolen und/oder triolen eines unter
500 liegenden Molekulargewichts

verwendet, wobei die Di- und/oder Trialkanolamine der
Komponente c) in einer Menge von 3 bis 50 Gew.-Teilen
pro 100 Gew.-Teilen der Komponente b) zum Einsatz gelangen.

Le A 23 992

2. Verfahren gemäß Anspruch 1, dadurch gekennzeichnet, daß man als Komponente b) Polyetherpolyole bzw. Gemische von Polyetherpolyolen verwendet, die sich zumindest zu 80 Hydroxyläquivalent-% aus solchen Polyetherpolyolen zusammensetzen, die durch Alkoxylierung geeigneter Startermoleküle hergestellt worden sind, wobei am Ende der Alkoxylierungsreaktion reines Ethylenoxid in einer Menge von mindestens 10 Gew.-%, bezogen auf alle bei der Alkoxylierungsreaktion eingesetzten Alkylenoxide verwendet worden ist.

3. Verfahren gemäß Anspruch 1 und 2, dadurch gekennzeichnet, daß man als Komponente c) Di- und/oder Triethanolamin, gegebenenfalls zusammen mit bis zu 50 Äquivalent-%, bezogen auf alle gegenüber Isocyanatgruppen reaktionsfähigen Gruppen der Komponente c), an stickstofffreien, gegebenenfalls Ethergruppen aufweisenden Alkanpolyolen eines unter 500 liegenden Molekulargewichts und einer (mittleren) Hydroxylfunktionalität von 2 bis 3 verwendet.

4. Verfahren gemäß Anspruch 1 bis 3, dadurch gekennzeichnet, daß man als Katalysator d) Dimethylzinn-dilaurat verwendet.

Le A 23 992